**Europäisches Patentamt**

**European Patent Office**

**Office européen des brevets**

(19)

(11) Veröffentlichungsnummer : **0 360 113 B1**

(12)

# EUROPÄISCHE PATENTSCHRIFT

(45) Veröffentlichungstag der Patentschrift :
**03.06.92 Patentblatt 92/23**

(51) Int. Cl.$^5$ : **F25B 45/00**

(21) Anmeldenummer : **89116742.1**

(22) Anmeldetag : **09.09.89**

(54) Verfahren zum umweltfreundlichen Entsorgen eines Kühlsystems.

(30) Priorität : **17.09.88 DE 3831693**

(43) Veröffentlichungstag der Anmeldung :
**28.03.90 Patentblatt 90/13**

(45) Bekanntmachung des Hinweises auf die
Patenterteilung :
**03.06.92 Patentblatt 92/23**

(84) Benannte Vertragsstaaten :
**AT CH DE LI**

(56) Entgegenhaltungen :
**DE-A- 3 728 174**
**GB-A- 2 009 874**
**GB-A- 2 040 426**
**US-A- 2 279 636**
**US-A- 2 462 535**

(56) Entgegenhaltungen :
**US-A- 3 045 511**
**US-A- 3 548 861**
**US-A- 3 974 846**
**US-A- 4 476 688**
**US-A- 4 698 983**

(73) Patentinhaber : **BROWN BOVERI-YORK Kälte-
und Klimatechnik GmbH
Gottlieb-Daimler-Strasse 6
W-6800 Mannheim 1 (DE)**

(72) Erfinder : **Schmidt, Hans-Jörg
Königsberger Strasse 8
W-6718 Grünstadt (DE)**

(74) Vertreter : **Rupprecht, Klaus, Dipl.-Ing. et al
c/o Asea Brown Boveri Aktiengesellschaft
Zentralbereich Patente Postfach 100351
W-6800 Mannheim 1 (DE)**

EP 0 360 113 B1

## Beschreibung

Die Erfindung betrifft ein Verfahren zum umweltfreundlichen Entsorgen eines einen Kältemittelverdichter aufweisenden, geschlossenen Kühlsystems eines Kühlgerätes.

Die Entsorgung von ausgedienten Kühlgeräten der genannten Art, insbesondere Kühl- und/oder Gefrierschränken aus dem Haushalts-oder Gewerbebereich, bedarf besonderer Sorgfalt. Während die festen Gehäusebestandteile der Kühlgeräte ohne weiteres verschrottet werden können, ist eine umweltfreundliche Entsorgung des Kühlsystems weit schwieriger und aufwendiger. Denn das im Kühlsystem enthaltene Kältemittel, meist auf der Basis von fluorierten Chlorkohlenwasserstoffen, soll aus Gründen des Umweltschutzes nicht in die Umgebung und die Atmosphäre gelangen. Um dies zu vermeiden, ist es aus dem internen Stand der Technik bekannt, einen mit einer Längsbohrung versehenen Dorn in die vom Kältemittelverdichter oben abgehende Kältemittel-Druckleitung des Kühlsystems einzudrücken und das gasförmige Kältemittel in einen geschlossenen Sammelbehälter, erforderlichenfalls unter Zwischenschaltung eines Verdichters, einzubringen. Hierbei bleibt das zusammen mit dem Kältemittel während der Herstellung des Kühlgerätes in das Kühlsystem eingebrachte Schmieröl im Kühlsystem, vorzugsweise an dessen tiefstem Bereich zurück. Da das Kältemittel weitgehend mit dem Schmieröl mischbar oder in diesem lösbar ist, verbleibt ein großer Teil des Kältemittels, ungefähr 20 bis 60%, im Schmieröl zurück und wird bei einem Anstieg der Kühlsystemtemperatur infolge eines Anstiegs der Umgebungstemperatur aus dem Schmieröl ausgetrieben, so daß es zu einer Umweltbelastung kommen kann.

Der Erfindung liegt daher die Aufgabe zugrunde, ein Verfahren der eingangs genannten Art unter Überwindung der Nachteile des Standes der Technik derart weiterzubilden, daß das im Kühlsystem enthaltene Schmieröl auf einfache Weise und insbesondere zusammen mit dem gasförmigen Kältemittel aus dem Kühlsystem entfernt werden kann. Zusätzlich soll das Verfahren ohne Schwierigkeiten auf Kühlgeräte der verschiedensten Bauart anwendbar sein. Darüber hinaus soll eine Vorrichtung angegeben werden, die bei einfachem Aufbau für die Durchführung des Verfahrens besonders geeignet ist.

Diese Aufgabe wird mit einem Verfahren mit den Merkmalen des Anspruches 1 gelöst.

Es wird also unter Abschirmung gegenüber der Umgebung in jenem Bereich des Kühlsystems eine Öffnung eingebracht, in dem sich das Schmieröl ansammelt. Üblicherweise ist dies der tiefste Punkt des Kühlsystems bei der jeweiligen Aufstellung des Kühlgerätes. Durch entsprechende Aufstellung des Kühlgerätes vor der Entsorgung wie normale Arbeitsstellung, Seitenlage oder Kopflage wird zweckmäßig der Bereich der Schmierölansammlung festgelegt. Vorteilhaft werden solche Bereiche gewählt, an denen Abdichtmaßnahmen gegen den Übertritt von Schmieröl und/oder Kältemittel in die Umgebung leicht durchgeführt werden können. Empfehlenswert sind Bereiche mit nach Möglichkeit ausreichend großen ebenen oder gewölbten Außenflächen. Durch die eingebrachte Öffnung wird zunächst das Schmieröl und dann das gasförmige Kältemittel dem Kühlsystem entnommen und unter Abschirmung gegen die Umgebung dem Kältemittel-Sammelbehälter zugeführt und dort zwischengelagert. Die Öffnung besitzt zweckmäßig eine lichte Weite, die einen schnellen und leichten Abfluß des Schmiermittels gewährleistet. Der Fluß des Schmieröls wird hierbei durch den auf ihm lastenden Druck des gasförmigen Kältemittels des Kühlsystems gesteigert. Gegebenenfalls wird eine geeignete Pumpe eingeschaltet, die das Schmieröl zusammen mit dem gasförmigen Kältemittel weitestgehend aus dem Kühlsystem absaugt und in dem Sammelbehälter fördert. Nach diesem Vorgang ist es nicht erforderlich, das Kühlsystem wieder zu verschließen, da es praktisch frei ist von umweltbelastenden Medien. Auch läßt sich jetzt das Kühlsystem ohne weiteres verschrotten. Das im Sammelbehälter unter Verschluß gehaltene Schmieröl-Kältemittel wird dann an den Kältemittelhersteller zurückgegeben, der dieses aufarbeitet.

Ist das Verfahren für die Entsorgung eines Kühlsystems vorgesehen, in dessen tiefsten Bereich ein gekapselter Verdichter angeordnet ist, so besteht eine besonders bevorzugte Weiterbildung der Erfindung darin, daß die Öffnung während einer Aufstellung des Kühlgerätes, die der Betriebsstellung gleich ist, im Bereich der schmierölansammlung des Verdichters in die Kapsel eingebracht wird. Dies ist besonders günstig, da an der Kapsel des Verdichters Dichtmaßnahmen gegen den Übertritt von Schmieröl oder gasförmigen Kältemittel in die Umgebung leicht durchgeführt werden können. Hierbei ist es für eine vollständige Entleerung besonders günstig, wenn die Öffnung im tiefsten Bereich der schmierölansammlung eingebracht wird.

Eine Vorrichtung zur Entnahme des Inhalts aus einem innendruckbelasteten Bauteil durch Einbringen einer Öffnung in die Wandung des Bauteils, ohne daß der Inhalt des Bauteils unkontrolliert in die Umgebungsluft entweichen kann, ist bekanntgeworden durch die US-A1-30 45 511. Es handelt sich bei der bekannten Vorrichtung im wesentlichen um einen Entnahmekopf, der eine mit einer Dichtung versehene stirnseite, in welche ein Hohlraum mündet, aufweist und mittels einer Klammer an das innendruckbelastete Bauteil, nämlich ein Gasrohr,angepreßt ist. In dem Hohlraum ist eine in Längsrichtung bewegliche Bohrstange angeordnet, die mit einem Ende-den Entnahmekopf auf der der Stirnseite gegenüberliegenden Seite durchgreift, wobei sie mittels Dichtungen gasdicht gelagert ist. Das im Hohlraum befindliche Ende der Bohrstange ist als Rohrwerkzeug aus-

2

gebildet, das heißt mit zwei angeschliffenen schneiden entsprechend handelsüblichen Spiralbohrern.

Am anderen Ende der Bohrstange ist ein Außengewinde eingeformt, das mit dem Entnahmekopf zusammenarbeitet und durch Drehung der Bohrstange den Vortrieb auf die Wandung des Bauteils zu bewirkt. Gleichzeitig arbeitet sich die am Ende der rohrstange befindlichen Schneiden in die Wandung ein und tragen dies örtlich durch Spanbildung ab, bis schließlich die Entnahmeöffnung hergestellt ist

Von Nachteil ist die bekannte Vorrichtung hinsichtlich der durch die Gewindelänge begrenzten Eindringtiefe der Bohrstange sowie durch die erforderliche wiederkehrende Bearbeitung (schleifen) der schneiden. schließlich ist die bekannte Vorrichtung auf die Entleerung von Gasrohren mit kleinen Durchmessern zugeschnitten.

Eine Verwendung zur Entleerung von Kühlsystemen, bei denen flüssiges Schmieröl und Kältemittel austreten, ist weder vorgesehen noch ohne weiteres möglich.

Gemäß der Weiterbildung der Erfindung nach Anspruch 4 soll eine einfache, schnelle aber sichere Entleerung von Kühlsystemen von Kühlgeräten mittels einer speziellen Entnachmevorrichtung ermöglicht, werden.

Danach ist vorgesehen, daß der Entnahmekopf an die Kapsel des Verdichters des Kühlsystems angesetzt wird und daß die Bohrstange, deren im Hohlraum befindliches Ende eine über den gesamten Querschnitt im Winkel von 20 bis 45° zur Längsachse verlaufende schneide aufweist, mittels schlag auf das aus dem Entnahmekopf ragende Ende in die Kapsel eindringt.

Durch diese Vorrichtung ist sowohl das Einbringen der Öffnung in das Kühlsystem als auch die Entnahme des Schmieröls und des Kältemittels sehr einfach und schnell durchzuführen, wobei der Entnahmekopf für das Andrücken an geeignet große Flächen konzipiert ist.

Eine zweckmäßige Weiterbildung der Erfindung besteht darin, daß als Klammer ein mit Joch und Spannvorrichtung verbundenes Spannband vorgesehen ist, das um die die Schmierölansammlung Kapsel des Verdichters des Kühlsystems gelegt ist. Mit Hilfe dieses Spannbandes wird die Stirnseite des Entnahmekopfes auf einfache Weise am Kühlsystem befestigt und gegen dieses gedrückt, so daß das Einbringen der Öffnung in das Kühlsystem und der Abfluß seines Inhalts unter absolutem Abschluß gegenüber der Umgebung verläuft.

Zur weiteren Vereinfachung des Anpressens des Entnahmekopfes an das Kühlsystem ist es zweckmäßig, daß das Spannband an den Enden des Joches unter Zwischenschaltung der Spannvorrichtung festlegbar ist, wobei das Joch an der Rückseite des Entnahmekopfes gelagert ist.

Für eine einfache Herstellung des Entnahmekopfes und dessen dichtes Anpressen an das Kühlsystem ist es am günstigsten, daß der Entnahmekopf und der koaxial in ihm angeordnete Hohlraum zylindrische Form aufweisen.

Vorteilhaft ist die Bohrstange koaxial zum Hohlraum angeordnet, wobei der Hohlraum einen größeren Querschnitt als die Bohrstange aufweist. Unter dem Begriff Bohrstange im sinne vorliegender Erfindung soll jedes stangenförmige Gerät verstanden sein, das geeignet ist, eine Öffnung in das Kühlsystem einzubringen, durch die das Schmieröl und das gasförmige Kältemittel leicht austreten kann.

Da bei der Einbringung der Öffnung in das Kühlsystem Späne anfallen können, ist es zweckmäßig, an die Austrittsöffnung einen Feststoffabscheider anzuschließen. In diesem Feststoffabscheider werden Späne oder andere vom Schmieröl und(oder Kältemittel mitgeführte Feststoffe zurückgehalten, so daß eine Verstopfung der zum Kältemittel-sammelbehälter führenden Verbindungsleitung vermieden ist.

Weitere Vorteile und Merkmale der Erfindung gehen aus der folgenden Beschreibung von Ausführungsbeispielen im Zusammenhang mit den schematischen Zeichnungen hervor.

Hierbei zeigt:

Fig. 1 die teilweise aufgebrochene Seitenansicht eines Kühlgeräts, dessen Kältemittelverdichter zur Entsorgung mit dem Kältemittel-Sammelbehälter verbunden ist,

Fig. 2 den Bereich II der Fig. 1 in größerer Darstellung und teilweise im axialen Vertikalschnitt,

Fig. 3 den Entnahmekopf gemäß Fig. 2 als Ausführungsvariante und

Fig. 4 eine Ansicht des Gegenstands der Fig. 2 aus der Richtung IV in verkleinerter und stark vereinfachter Darstellung.

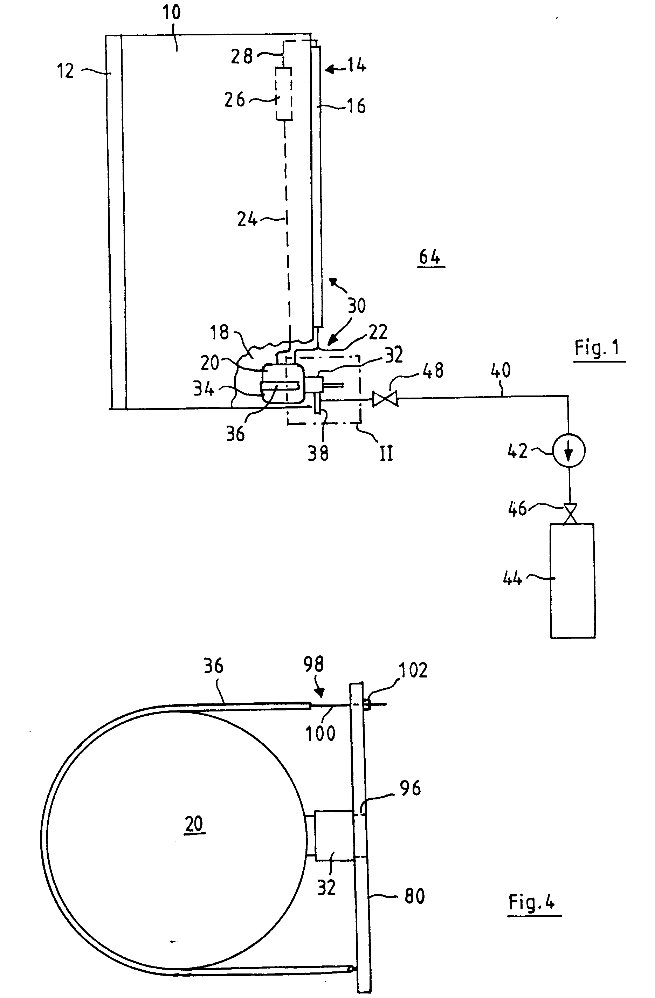

In Fig. 1 ist ein Kühlgerät 10 in Form eines Kühlschrankes in Seitenansicht und in normaler Aufstellungslage gezeigt, auf dessen Vorderseite eine Kühlschrank-Tür 12 und auf dessen Rückseite 14 der Kondensator 16 des Kühlsystems angedeutet ist. In einer zur Rückseite 14 offenen, unteren Nische 18 des Kühlgeräts ist im geodätisch tiefsten Bereich der gekapselte Kältemittelverdichter 20 angeordnet, der durch eine Druckleitung 22 mit dem Kondensator 16 und durch eine Saugleitung 24 mit dem im Kühlgerät angeordneten Verdampfer 26 verbunden ist. Beide Leitungen 22 und 24 gehen vom oberen Bereich des Kältemittelverdichters aus. Der Kältemittelverdichter 20, die Druckleitung 22, der Kondensator 16, die den Kondensator mit dem Verdampfer 26 verbindende Drosselleitung 28, der Verdampfer 26 sowie die Saugleitung 24 bilden im wesentlichen das Kühlsystem 30 im Sinne vorliegender Erfindung.

Für die Entfernung des Kältemittels und des Schmieröls aus dem Kühlsystem ist der Entnahmekopf 32 an die in der Zeichnung vertikale Außenwand der Kapsel 34 des Kältemittelverdichters im unteren Bereich angepreßt. Die Anpressung erfolgt hierbei durch ein um die Kapsel 34 geschlungenes, stählernes Spannband 36. Wie aus Fig. 4 ersichtlich ist, hat die Kapsel 34 einen kreisförmigen Umriß.

An den sich im Innern des Entnahmekopfes 32 befindenden und in Fig. 1 nicht eingezeichneten Hohlraum ist ein sich im Außenraum 64 befindender und nach unten zeigender Feststoffabscheider 38 angeschlossen. Der Feststoffabscheider ist durch eine Verbindungsleitung 40 mit eingefügter Schmieröl- und Kältemittel-Pumpe 42 mit dem mit einem Absperrorgan 46 versehenen druckfesten Kältemittel-Sammelbehälter 44 verbunden. Stromauf der Pumpe 42 ist noch ein Absperrorgan 48 in die Verbindungsleitung 40 eingefügt. Die Verbindungsleitung 40 hat eine für den Abfluß des Schmieröls geeignete lichte Weite.

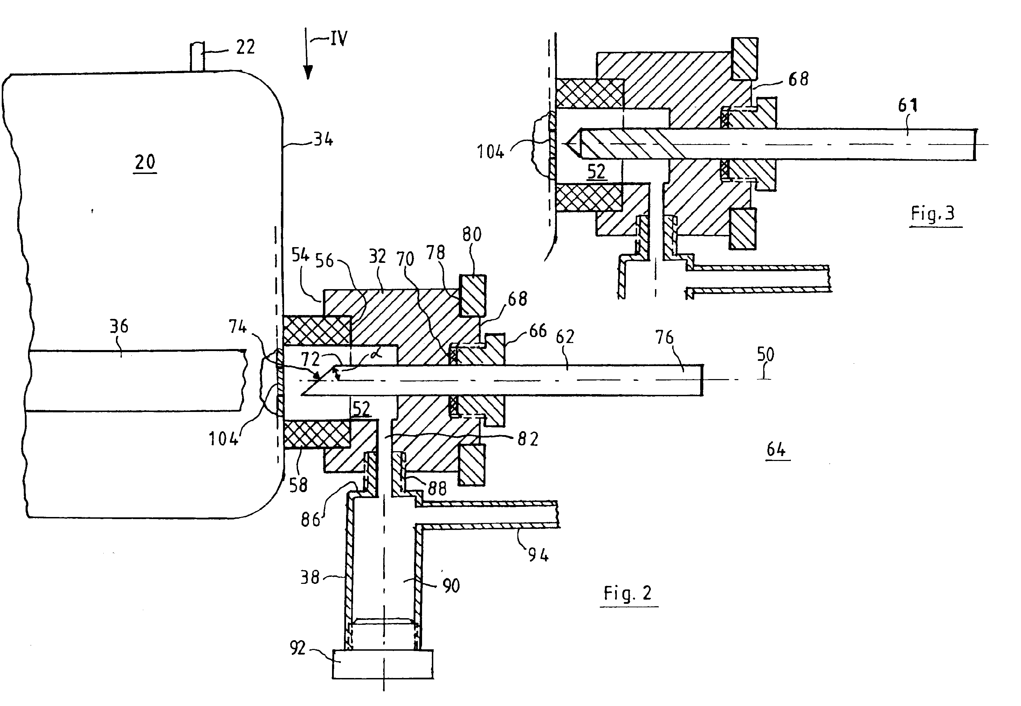

Fig. 2 zeigt die Einzelheit II der Fig. 1 in größerer Darstellung, wobei einzelne Teile im Schnitt dargestellt sind. Man erkennt den Kältemittelverdichter 20 sowie das um den Kältemittelverdichter geschlungene Spannband 36 sowie den Entnahmekopf 32.

Der Entnahmekopf 32 weist eine zylindrische Form auf und ist in seinem Innenraum mit einem zur Längsachse 50 des Entnahmekopfes koaxial angeordneten, zylindrischen Hohlraum 52 versehen, dessen lichte Weite ungefähr dem halben Außendurchmesser des Entnahmekopfes 32 gleich ist. In axialer Richtung erstreckt sich der Hohlraum, ausgehend von der Stirnseite 54 des Entnahmekopfes, ungefähr bis zur halben Länge des Entnahmekopfes. Die Längsachse 50 steht ungefähr senkrecht auf der zylindrischen Kapsel 34.

Im Bereich der Stirnseite 54 ist der Hohlraum 52 mit einer den Hohlraum erweiternden Stufe 56 versehen, wobei in den erweiterten Teil des Hohlraums eine elastische Dichtung 58, vorzugsweise aus ölfestem Gummi, eingesetzt ist, und wobei die Dichtung 58 bis zur Stufe 56 eingeführt ist. Die Stufe 56 weist zur besseren Abdichtung wenigstens einen ringförmigen Vorsprung auf, der sich in die Dichtung eindrückt. Dies ist in Fig. 2 nicht dargestellt.

Die Dichtung 58 ist ringförmig ausgebildet, so daß sich der Hohlraum 52 mit gleichbleibender Lichtweite auch durch die Dichtung 58 erstreckt. Die Dichtung 58 ragt ungefähr so weit aus dem Entnahmekopf in axialer Richtung aus der Stirnseite 54 heraus, wie es für eine sichere Dichtwirkung beim Anpressen des Entnahmekopfes 32 an den Verdichter 20 erforderlich ist. Vorzugsweise ragt die Dichtung ungefähr das 1 bis 3-fache ihrer Wandstärke aus dem Entnahmekopf heraus. Jener Bereich der Dichtung, der sich im erweiterten Bereich des Hohlraumes 52 befindet, hat eine axiale Länge von ungefähr dem 1 bis 3-fachen der Wandstärke der Dichtung.

In jenem axialen Bereich des Entnahmekopfes 32, in den sich der Hohlraum 52 nicht erstreckt, ist eine koaxiale Bohrung, angebracht, in der eine Bohrstange 62 von kreisförmigem Querschnitt in axialer Richtung bewegbar und um die Längsachse 50 drehbar gelagert ist. Um einen Übertritt von Schmieröl und/oder Kältemittel vom Hohlraum 52 in den Außenraum 64 zu verhindern, ist eine Stopfbüchse 66 vorgesehen, die von der Rückseite 68 des Entnahmekopfes her in den Entnahmekopf 66 eingeschraubt ist und die Bohrstange 62 umgibt und auf eine zwischen der Stopfbüchse 66 und dem Grund der Stopfbüchsenbohrung angeordnete Ringdichtung 70 einwirkt. Durch die Stopfbüchse wird zusätzlich verhindert, daß bei Überdruck im Hohlraum 52 die Bohrstange in axialer Richtung aus dem Entnahmekopf 32 gedrückt wird. Vorteilhaft ist es, die Bohrstange innerhalb des Hohlraumes 52 mit einem Anschlag zu versehen, der ein Herausdrücken der Bohrstange verhindert. Dieser Anschlag besteht zweckmäßig aus einem auf der Bohrstange befestigten Ring oder aus einem die Bohrstange quer durchdringenden und über das Profil der Bohrstange ragenden Stift.

Die Bohrstange 62 gemäß Fig. 2 besteht aus einem massivem, runden Metallstab, dessen einer Endbereich 72 im Hohlraum 52 angeordnet ist und als Bohrwerkzeug eine unter einem spitzen Winkel $\alpha$ zur Längs-achse 50 verlaufende Schneidfläche 74 aufweist. Der andere Endbereich 76 der Bohrstange 62 ragt aus der Rückseite 68 des Entnahmekopfes heraus. Die Gesamtlänge der Bohrstange 62 ist so gewählt, daß selbst beim Eindringen der Schneidfläche 74 in die Kapsel 34 des Verdichters 20 ein ausreichend langes Stück des Endbereiches 76 noch aus der Rückseite 68 des Entnahmekopfes herausragt. Vorzugsweise ist die Länge dieses herausragenden Stückes ungefähr das 5 bis 10-fache des Durchmessers der Bohrstange 62. Zwischen der Bohrstange und der zylindrischen Wand des Hohlraumes 52 ist ein für den leichten Abfluß des Schmieröls geeigneter Abstand eingehalten.

Die Rückseite des Entnahmekopfes 68 ist mit einem koaxialen, ringförmigen Absatz 78 versehen, der mit Abstand zur Stopfbüchse 66 verläuft. An diesem Absatz 78 ist das quer, vorzugsweise senkrecht zur Längsachse 50 verlaufende Joch 80 lose gelagert, an dem die Enden des Spannbandes 36 befestigt sind.

Der Entnahmekopf 32 ist mit einer vom Hohlraum 52 durch die Wand des Hohlraums radial nach außen und in Fig. 2 vorteilhaft nach unten führenden Entnahmeöffnung 82 versehen, an die der Feststoffabscheider 38 außerhalb des Entnahmekopfes angeschlossen ist. Die Entnahmeöffnung hat eine für eine schnelle Abfuhr des Schmieröls geeignete lichte Weite.

Der Feststoffabscheider 38 ist als geschlossener Hohlzylinder ausgebildet, dessen eine Stirnfläche 86 einen zentrischen Gewindestutzen 88 aufweist, der in die Entnahmeöffnung 82 eingeschraubt ist, so daß der zylindrische Innenraum 90 des Feststoffabscheiders 38 mit dem Hohlraum 52 verbunden ist. Zum Verschluß der anderen Stirnseite des Feststoffabscheiders ist ein Verschlußstopfen 92 dort eingeschraubt. Der Verschlußstopfen 92 besteht aus magnetischem Material, so daß in den Innenraum 90 eingeschleppte Metallteile vom Verschlußstopfen 92 festgehalten werden. In der Nähe des Gewindestutzens 88 ist ein radial nach außen führender Auslaßstutzen 94 an den Innenraum 90 angeschlossen. An diesen Auslaßstutzen ist die in Fig. 1 gezeigte Entnahmeleitung 40 durch in den Figuren nicht dargestellte, leicht lösbare Rohrverschraubungen angeschlossen.

Fig. 3 zeigt eine Ausführungsvariante des Gegenstands der Fig. 2. Der einzige Unterschied gegenüber Fig. 2 besteht darin, daß die Bohrstange 61 hier als Spiralbohrer ausgebildet ist, dessen Schneidkanten sich im Hohlraum 52 befinden und dessen Schaft im Entnahmekopf gelagert ist und aus der Rückseite 68 herausragt. Bezüglich der Länge und Abdichtung des Spiralbohrers gelten auch hier die zur Bohrstange gemäß Fig. 2 gegebenen Erläuterungen.

Fig. 4 zeigt eine Ansicht des Verdichters samt Entnahmevorrichtung aus der Richtung IV der Fig. 2 in vereinfachter und verkleinerter Darstellung. Man erkennt den zylinderförmigen Verdichter 20 mit stehender Längsachse, um dessen Kapsel 34 das leicht biegbare, dünne stählerne Spannband 36 geschlungen ist. Ferner erkennt man das stabförmige Joch 80, das vorzugsweise aus einem Flachstahl besteht. In der axialen Mitte des Joches 80 ist eine Bohrung 96 vorgesehen, mit deren Hilfe das Joch 80 auf den Absatz 78 des Entnahmekopfes leicht entfernbar, das heißt mit Spiel, gelagert ist. Am in Fig. 4 unteren Endbereich des Joches 80 ist das Spannband auf geeignete Weise, vorteilhaft durch ein Scharnier, befestigt, wogegen am entgegengesetzten Endbereich des Joches 80 das Spannband unter Zwischenschaltung einer Spannvorrichtung 98 mit dem Joch verbunden ist. Die in Fig. 4 gezeigte Spannvorrichtung weist einen am Spannband 36 befestigten Gewindestift 100 auf, der durch eine Öffnung des Joches 80 geführt ist und durch eine angedeutete Gewindemutter 102 durch das Joch ziehbar ist, so daß das Spannband 36 angespannt wird und den Entnahmekopf 32 mit eingefügter Dichtung 58 gegen die Kapsel 34 des Verdichters 20 drückt. Das Joch hat eine Länge; die mindestens der Dicke des Kältemittelverdichters 20 gleich ist.

Vor der Entfernung des Schmieröls und Kältemittels wird das Kühlgerät in normale Betriebsstellung gebracht, in der der Kältemittelverdichter unten ist, so daß sich das Schmieröl im Kältemittelverdichter sammelt. Zur Entfernung des Schmieröls und des Kältemittels aus dem Kühlsystem 30 wird die Entnahmevorrichtung 32 mit der mit der Dichtung versehenen Stirnseite 54 gegen die vertikale, zylindrische Kapsel 34 des Verdichters im unteren Bereich angestoßen und das Joch 80 auf die Rückseite des Entnahmekopfes aufgebracht. Jetzt wird das Spannband 36 um die Kapsel 34 gelegt und durch die Gewindemutter 102 derart angespannt, daß der Entnahmekopf 32 bzw. dessen Dichtung 58 vollkommen dicht gegen die Kapsel 34 des Verdichters 20 gepreßt wird. Jetzt wird der Entnahmestutzen 94 durch die in Fig. 1 näher erläuterten Verbindungsleitung 40 samt darin angeordneten Bauteilen mit dem Kältemittel-Sammelbehälter 44 verbunden. Anschließend werden die Absperrorgane 46,48 geöffnet.

Anschließend wird durch einen Hammerschlag auf das sich im Außenraum befindende Ende der Bohrstange 62 diese in Richtung zur Kapsel 34 vorgetrieben, so daß die Schneidfläche 74 unter Einbringung einer Öffnung 104 in die Kapsel 34 eindringt. Jetzt wird die Bohrstange wieder in Richtung Außenraum so weit axial zurückgezogen, daß die in Fig. 2 und 3 angedeutete Öffnung 104 der Kapsel 34 frei ist und zunächst das Schmieröl aus dem Innenraum des Verdichters 20 in den Hohlraum 52 übertritt, von hier durch die Entnahmeöffnung 82 in den Feststoffabscheider 38 strömt, in dem mitgeführte Metallteile oder Metallspäne durch den magnetischen Verschlußstopfen 92 festgehalten und abgeschieden werden. Das solchermaßen grobgereinigte Schmieröl strömt dann durch den Auslaßstutzen 94 und die Verbindungsleitung 40 unter Mitwirkung der Pumpe 42 in den Kältemittel-Sammelbehälter 44. Nach dem Ende des Schmierölflusses strömt das gasförmige Kältemittel auf demselben Weg zum Kältemittel-Sammelbehälter 44.

Reste von Schmieröl die sich im Verdichter 20 unterhalb der Öffnung 104 noch befinden könnten, werden dadurch entfernt, daß das Kühlgerät nach hinten geneigt wird und für das Schmieröl somit die Möglichkeit gegeben ist, zur Öffnung 104 zu fließen. Hierzu steht das Kühlgerät zweckmäßig auf einem Arbeitstisch.

Die Pumpe 42 bleibt solange in Betrieb, bis sich im Kühlsystem ein gewisses Vakuum gebildet hat und somit Gewähr gegeben ist, daß das Kühlsystem praktisch frei ist vom gasförmigen Kältemittel. Jetzt wird das Absperrorgan 46 des Kältemittel-Sammelbehälters 44 geschlossen, die Pumpe 42 außer Betrieb genommen und der Entnahmekopf samt Spannband vom Verdichter 20 entfernt. Vorher wird das Absperrorgan 48 geschlossen.

Das Kühlsystem des Kühlgerätes ist jetzt praktisch frei von Kältemittel und Kältemittel enthaltendem Schmieröl, so daß das Kühlgerät ohne weiteres verschrottet werden kann.

Weist der Entnahmekopf 32 eine Bohrstange 61 in Form eines Spiralbohrers auf, so wird zum Einbringen der Öffnung 104 in die Kapsel 34 des Kältemittelverdichters an den Schaft des Spiralbohrers eine Handbohrmaschine angeschlossen und ein Loch in die Kapsel 34 gebohrt. Anschließend wird der Spiralbohrer so weit

5

zurückgezogen, daß die Öffnung 104 freiliegt. Im übrigen verläuft auch hier die Entsorgung wie bereits weiter oben beschrieben wurde.

Die Öffnung 104 muß eine lichte Weite habe, die für den leichten Abfluß des Schmieröls geeignet ist. Daher muß die Bohrstange 61 und 62 für das Einbringen einer Öffnung von mindestens 6 mm lichter Weite geeignet sein. Vorzugsweise beträgt der Durchmesser des Bohwerkzeugs der Bohrstange 8 bis 15 mm.

Für die Dimensionierung des Entnahmekopfes gilt zweckmäßig folgendes:

Außendurchmesser 4 bis 8 cm, axiale Länge das 0,8 bis 1,5-fache des Außendurchmessers, die lichte Weite des Hohlraumes 52 beträgt das 0,5 bis 0,9-fache des Entnahmekopf-Außendurchmessers, die Tiefe des Hohlraumes 52 ist ungefähr das 0,4 bis 0,6-fache der Länge des Entnahmekopfes.

Der Feststoffabscheider 38 hat eine axiale Länge von ungefähr 4 bis 15 cm bei einer Lichtweite von 2 bis 4 cm.

Die Stirn- und Rückseite des Entnahmekopfes verlaufen senkrecht zur Längsachse 50.

## Patentansprüche

1. Verfahren zum umweltfreundlichen Entsorgen eines einen Kältemittelverdichter (20) aufweisenden, geschlossenen Kühlsystems eines Kühlgerätes, wobei das Kühlsystem (30) über eine eingebrachte Öffnung (104) unter Abschluß gegen die Umgebung mit einem geschlossenen Kältemittel-Sammelbehälter (44) in Verbindung gebrachted, wobei die Öffnung (104) im Bereich einer Schmierölansammlung des Kühlsystems (30) eingebracht wird und das Schmieröl zusammen mit dem Kältemittel dem Kältemittel-Sammelbehälter (44) zugeführt wird.

2. Verfahren nach Anspruch 1 für die Entsorgung eines Kühlsystems, das im tieferen Bereich einen gekapselten Kältemittelverdichter aufweist, dadurch gekennzeichnet, daß die Öffnung (104) bei einer Aufstellung des Kühlgerätes (10), die der Betriebsstörung gleich ist, im Bereich der Schmierölansammlung des Kältemittelverdichters (20) eingebracht wird.

3. Verfahren nach Anspruch 1 oder 2, dadurch gekennzeichnet, daß die Öffnung (104) im tiefsten Bereich der Schmierölansammlung eingebracht wird.

4. Verfahren nach Anspruch 1 unter Verwendung eines Entnahmekopfes (32), der eine mit einer Dichtung (58) versehene Stirnseite (54), in welche ein Hohlraum (52) mündet, aufweist und mittels einer Klammer an das Bauteil (34) angepreßt wird, wobei der Hohlraum (52), der eine Austrittsöffnung (82) für den Inhalt besitzt, eine in Längs richtung bewegliche Bohrstange (62) aufnimmt, deren eines im Hohlraum (52) befindliche Ende eine unter einem Winkel von 20 bis 45° zur Längsachse über dessen gesamten Querschnitt verlaufende Schneidfläche (72) aufweist, während das andere Ende der Bohrstange (62), die im Entnahmekopf (32), den sie durchgreift, gasdicht gelagert ist, aus der der Stirnseite (54) gegenüberliegenden Rückseite (68) des Entnahmekopfes (32) herausragt, wobei der Entnahmekopf (32) an die Kapsel (34) des Verdichters (20) angesetzt wird, und zur Herstellung der Entnahmeöffnung (104) in der Kapsel (34) das im Hohlraum (52) befindliche Ende der Bohrstange (62) mittels Schlag auf ihr aus dem Entnahmekopf (32) herausragendes Ende (76) in die Kapsel (34) eingeführt wird.

5. Verfahren nach Anspruch 4, dadurch gekennzeichnet, daß die Klammer durch mindestens ein Spannband (36) sowie ein Joch (80) und eine Spannvorrichtung (98) gebildet ist und daß das Spannband (36) um die Kapsel (34) des Verdichters (20) gelegt wird.

6. Verfahren nach Anspruch 5, dadurch gekennzeichnet, daß das Spannband (36) an den Enden des Joches (80) unter Zwischenschaltung der Spannvorrichtung (98) festgelegt wird, wobei das Joch (80) an der Rückseite des Entnahmekopfes (32) gelagert ist.

## Claims

1. Process for the environment-friendly disposal of a refrigerator's closed refrigerating system exhibiting a refrigerant compressor (20), the refrigerating system (30) being brought into connection, via an inserted opening (104) and sealed off from the environment, with a closed refrigerant collecting tank (44), the opening (104) being made in the area of a lubricating oil store of the refrigerating system (30) and the lubricating oil, together with the refrigerant, being conveyed to the refrigerant collecting tank (44).

2. Process according to Claim 1 for the disposal of a refrigerating system which exhibits, in its lower area, an encapsulated refrigerant compressor, characterised in that the opening (104) is made in the area of the lubricating oil store of the refrigerant compressor (20) when the refrigerator (10) is installed in a position which is the same as its operating position.

3. Process according to Claim 1 or 2, characterised in that the opening (104) is made in the lowermost area of the lubricating oil store.

4. Process according to Claim 1, using an extraction head (32) which exhibits a face (54) provided with a seal (58), into which face a cavity (52) opens out, and which is pressed by means of a clamp against the structural member (34), the cavity (52), which possesses an outlet opening (82) for the contents, receiving a boring rod (62) which is movable in the longitudinal direction and the one end of which, located in the cavity (52), exhibits a cutting surface (72) running across its entire cross-section at an angle of 20 to 45° to the longitudinal axis, whilst the other end of the boring rod (62), which is mounted in a gas-tight manner in the extraction head (32) through which it passes, protrudes from the back (68) of the extraction head (32) lying opposite the face (54), the extraction head (32) being placed against the capsule (34) of the compressor (20) and, for the creation of the extraction opening (104) in the capsule (34), the end of the boring rod (62) located in the cavity (52) being introduced into the capsule (34) by means of a blow to its end (76) protruding from the extraction head (32).

5. Process according to Claim 4, characterised in that the clamp is formed by at least one tightening strap (36) and a yoke (80) and a tightening device (98) and in that the tightening strap (36) is placed around the capsule (34) of the compressor (20).

6. Process according to Claim 5, characterised in that the tightening strap (36) is fastened to the ends of the yoke (80), the tightening device (98) being interposed between them, and the yoke (80) being mounted on the back of the extraction head (32).

**Revendications**

1. Procédé pour éliminer sans risque de pollution un circuit de réfrigération fermé d'un appareil de réfrigération comportant un compresseur de fluide réfrigérant (20), le circuit de réfrigération (30) étant amené en communication étanche par rapport à l'environnement avec un réservoir de collecte du fluide réfrigérant au moyen d'une ouverture (104) pratiquée dans ledit circuit, l'ouverture (104) étant pratiquée dans la région d'une réserve d'huile de lubrification du circuit de réfrigération (30) et l'huile de lubrification étant recueillie avec le fluide réfrigérant dans le réservoir de collecte du fluide réfrigérant (40).

2. Procédé selon la revendication 1 pour éliminer un circuit de réfrigération qui comporte dans sa partie basse un compresseur de fluide réfrigérant étanche, caractérisé en ce qu'on pratique l'ouverture (104) dans la région de la réserve d'huile du compresseur de fluide réfrigérant (20) tandis que l'appareil de réfrigération (10) se trouve dans une position identique à la position de fonctionnement.

3. Procédé selon la revendication 1 ou 2, caractérisé en ce qu'on pratique l'ouverture (104) dans la partie la plus basse de la réserve d'huile.

4. Procédé selon la revendication 1 dans lequel on utilise une tête de vidange (32) qui est pressée sur l'élément (34) au moyen d'une bride et qui comporte une face frontale (54) munie d'un joint (58) dans laquelle débouche une chambre (52), la chambre (52) qui comporte un orifice (82) pour l'évacuation de son contenu recevant une broche de perçage (62) qui est mobile dans la direction axiale et dont l'une des extrémités située dans la chambre (52) présente une surface coupante (72) qui s'étend sur l'ensemble de sa section avec angle compris entre 20 et 45°, tandis que l'autre extrémité de la broche de perçage (62) qui est montée avec étanchéité au gaz dans la tête de vidange (32) et traverse celle-ci fait saillie sur la face arrière (68) de la tête de vidange (32) opposée à la face frontale (54), la tête de vidange (32) étant appliquée sur l'enveloppe (34) du compresseur (20) et l'extrémité de la broche de perçage (62) située dans la chambre (52) étant introduite dans l'enveloppe (34) en frappant sur son extrémité (76) qui fait saillie par rapport à la tête de vidange (32), afin de réaliser l'orifice de vidange (104).

5. Procédé selon la revendication 4, caractérisé en ce que la bride est constituée par au moins une sangle de serrage (36) ainsi que par une traverse (80) et un dispositif de tension (98) et en ce qu'on place la sangle de serrage (36) autour de l'enveloppe (34) du compresseur (20).

6. Procédé selon la revendication 5, caractérisé en ce que la sangle de serrage (36) est fixée aux extrémités de la traverse (80) avec interposition du dispositif de tension (98), la traverse (80) étant montée sur la face arrière de la tête de vidange (32).

Fig. 1

Fig. 4

Fig.3

Fig.2